# EUROPEAN PATENT APPLICATION

(11) **EP 4 847 967 A1**
(43) Date of publication of application: **02.12.2026**
(21) Application number: 25179415.2
(22) Date of filing: 28.05.2025
(51) Int. Cl.: G01S 19/36, H01Q 1/32

(54) **TELEMATICS CONTROL UNIT FOR A VEHICLE**

(71) Applicant: Valeo Comfort and Driving Assistance, 94000 Créteil (FR)
(72) Inventor: ATMATZAKIS, Georgios, 94000 Créteil (FR); JAFARI, Ahmadreza, 94000 Créteil (FR)
(74) Representative: Delaval, Guillaume Laurent

(57) **Abstract**

The invention relates to a telematics control unit (1) for a vehicle, said telematics control unit (1) comprising :
- at least two cellular antennas (10) that are configured to receive each cellular signals (S_{c}), wherein :
- said at least two cellular antennas (10) are also configured to resonate at a GNSS frequency band (f_{gnss}) in order to receive each a linear component (Lc) of a GNSS signal (S_{GNSS}), one of said at least two cellular antennas (10) being polarized in one direction (d), and the other one being polarized in a second direction (d') orthogonal to the first direction (d),
- said telematics control unit (1) further comprising :
- two diplexers (11) that are configured to separate the cellular signals (S_{c}) received by the corresponding cellular antenna (10) from the linear component (Lc) of the GNSS signals (S_{GNSS}) received by said corresponding cellular antenna (10) and to transmit said cellular signals (S_{c}) to at least one cellular module (13),
- a coupler (12) that is configured to receive from said two diplexers (11) each linear component (Lc) coming from each of said at least two cellular antennas (10) as input and that is configured to combine said linear components (Lc) with a 90° phase shift difference in order to recreate a GNSS signal (S'_{GNSS}) and to transmit it to a GNSS receiver (14).

## Description

### FIELD OF THE INVENTION

The present invention relates to a telematics control unit for a vehicle. Such telematics control unit may be used, but not exclusively, in the automotive domain.

### BACKGROUND OF THE INVENTION

In the automotive domain, a telematics control unit for a vehicle, well-known by the person skilled in the art, comprises different types of antennas in order to wirelessly connect the vehicle to different systems such as cloud services, other vehicles, base stations etc. In order for the vehicle to communicate with different systems, the telematics control unit comprises in particular :
- at least two cellular antennas that are configured to receive each cellular signals,
- one GNSS antenna that is configured to receive a GNSS signal.

Said at least two cellular antennas are connected to a cellular module. They permit a connection to a base station to estimate the position of the vehicle via a triangulation. They also support voice and data connectivity within the 5G frequency band. The GNNS antenna is connected to a GNSS receiver that connects to a satellite. The GNSS antenna is used to have a precise position of the vehicle.

One problem of this prior art is that this kind of telematics control unit is heavy and expensive.

It is an object of the invention to provide a telematics control unit for a vehicle, which resolves one of the problems above-stated.

### SUMMARY OF THE INVENTION

To this end, it is provided a telematics control unit of the invention that is defined according to claim 1.

As we will see in further details, thanks to the use of the same antennas (the cellular one) that receive both the cellular signals and the GNSS signals, one removes an extra antenna of the prior art, the GNSS one, thus reducing the cost and the weight of the telematics control unit.

Non-limitative embodiments of the telematics control unit of the invention are defined in the dependent claims 2 to 8.

In a non-limitative embodiment, each one of said at least two cellular antennas comprises each :
- a body and an arm, said arm comprising :
- a first feeding pin that is connected to a first reactive component so that the cellular antenna resonates at a cellular frequency band,
- a ground pin that matches the impedance of the cellular antenna,
- a second feeding pin that is connected to a second reactive component so that the cellular antenna resonates at the GNSS frequency band.

### BRIEF DESCRIPTION OF THE DRAWINGS

Some embodiments of methods and/or system in accordance with embodiments of the present invention are now described, by way of example only, and with reference to the accompanying drawings, in which:
Figure 1 is a schematic illustration of a first non-limitative embodiment of a telematics control unit for vehicle, said telematics control unit comprising at least two cellular antennas, two diplexers, and a coupler, according to the invention,
Figure 2 is a schematic illustration of a second non-limitative embodiment of a telematics control unit for vehicle, said telematics control unit comprising at least two cellular antennas, two diplexers, a coupler, a cellular module and a GNSS receiver, according to the invention,
Figure 3 is a top view of an electronic support of the telematics control unit of figure 2, said electronic support supporting four cellular antennas in a non-limitative embodiment.

### DESCRIPTION OF EMBODIMENTS OF THE INVENTION

In the following description, well-known functions or constructions by the person skilled in the art are not described in detail since they would obscure the invention in unnecessary detail.

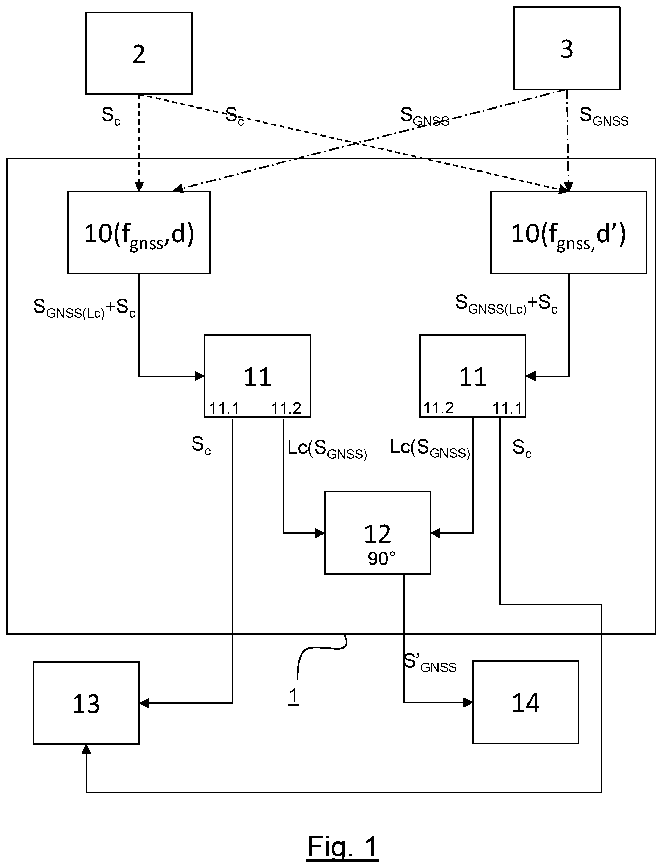

The present invention relates to a telematics control unit 1 for a vehicle, said telematics control unit 1 being described in reference to figures 1 to 3. The telematics control unit 1 also referred to as TCU in the following. In a non-limitative embodiment, the vehicle is a motor vehicle. In non-limitative variants of embodiment, the motor vehicle has a combustion engine, has an electric engine, or a hybrid engine.

The TCU permits wireless communication of the vehicle with cloud services, other vehicles, base stations etc. to exchange information such as in non-limitative examples the position of the vehicle, the speed of the vehicle, engine data etc. In non-limitative examples, the TCU is used for the safety of the driver and passengers, to optimize the traffic flow and to make automatic emergency calls when an accident occurs.

In a first non-limitative embodiment illustrated figure 1, the telematics control unit 1 comprises :
- at least two cellular antennas 10,
- two diplexers 11,
- a coupler 12.

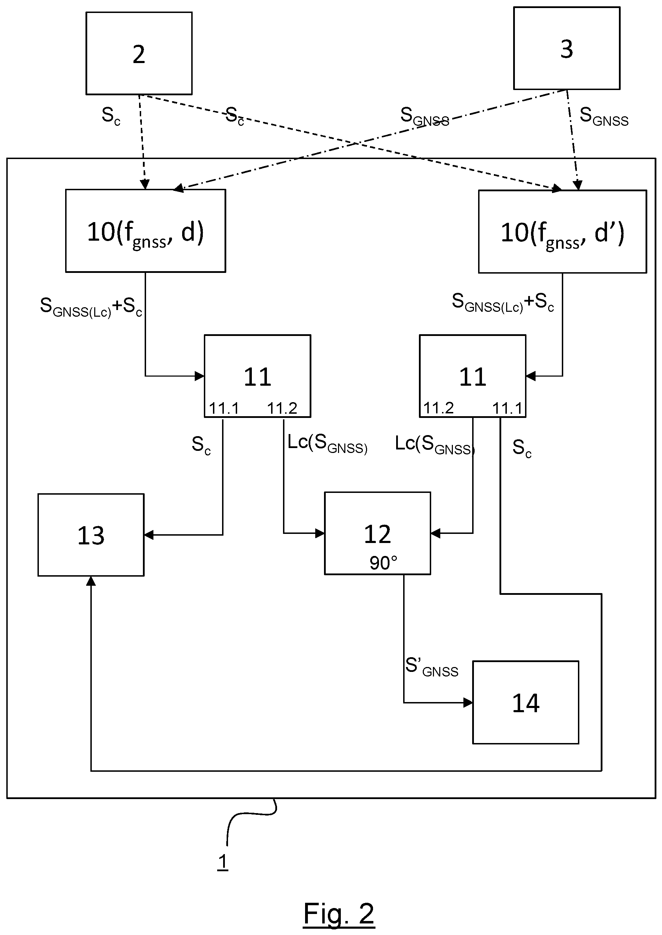

In a second non-limitative embodiment illustrated figure 2, the telematics control unit 1 further comprises :
- at least one cellular module 13, also called wireless module, and
- a GNSS receiver 14.

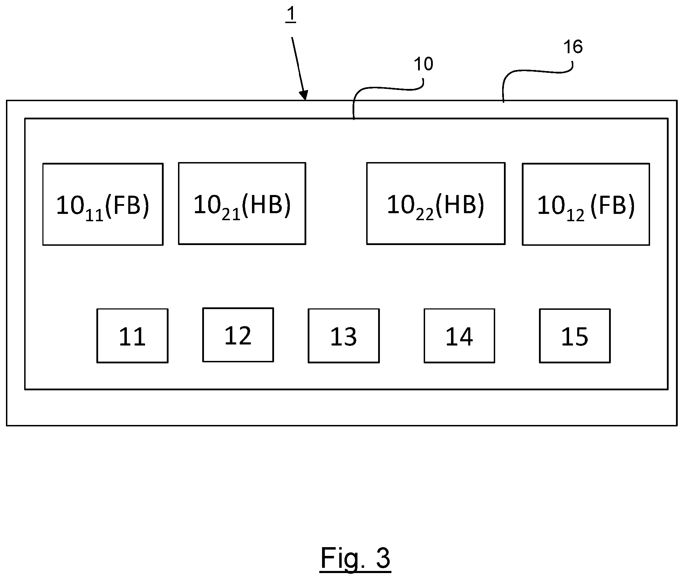

The TCU further comprises at least one electronic support 15 that is configured to support said at least two cellular antennas 10, said two diplexers 11, and said coupler 12. As illustrated in figure 3, in a non-limitative embodiment, said at least one electronic support 15 further support said cellular module 13 and said GNSS receiver 14. In a non-limitative embodiment, the electronic support 15 is a printed circuit board assembly also referred to as PCBA in the following.

The TCU further comprises a housing 16 (illustrated in figure 3) to house the electronic support 15 with said at least two cellular antennas 10, said two diplexers 11, said coupler 12, said cellular module 13 and said GNSS receiver 14.

It is to be noted that more than one electronic support 15 can be used to support the electronic elements of the TCU.

The different electronic elements of the TCU are described in detail in the following.

### Cellular antennas 10

Said at least two cellular antennas 10 are illustrated in figures 1 to 3.

The two cellular antennas 10 are supported by the electronic support 15. In a non-limitative embodiment, the two cellular antennas 10 are arranged next to two diplexers 11. They are independent from the two diplexers 11 and are each connected to one diplexer 11 via a transmission line.

The two cellular antennas 10 are responsible for the transmission and reception of cellular signals S_{c} for wireless communication. They are configured to receive and transmit cellular signals S_{c} from and to a cellular base station 2 illustrated in figures 1 and 2. They are thus configured to receive and send each cellular signal S_{c}. They are thus configured to be in a receiving mode and in a transmitting mode.

The cellular antennas 10 are able to resonate according to a wide range of cellular frequency band : from 617 MHz to 4.2GHz according to the North American standard, and from 703MHz to 5GHz according to the European standard. More standards can be supported, for example China and Rest of the World (ROW).

In a non-limitative embodiment illustrated in figure 3, the telematics control unit 1 comprises :
- two full band FB cellular antennas 10₁ referenced 10₁₁ and 10₁₂ in the figure to provide low band and high band frequencies,
- two high band HB cellular antennas 10₂ referenced 10₂₁ and 10₂₂ in the figure to provide the same high band frequencies.

This non-limitative embodiment is interesting for the MIMO ("Multiple Input-Multiple Output") cellular technology to be fully covered.

To receive a GNSS signal S_{GNSS}, two orthogonal polarizations are needed to recreate a RHCP ("Right Hand Circular Polarized") polarization as explained later in the following, so the TCU comprises at least two cellular antennas 10.

The two cellular antennas 10 are thus responsible for the reception of GNSS signals S_{GNSS} for satellite communication. They are therefore also configured to receive GNSS signals from and to a satellite 3 illustrated in figures 1 and 2. In a non-limitative embodiment, the satellite 3 is a GPS "Global Positionning System".

The two cellular antennas 10 are thus configured to receive GNSS signals S_{GNSS}. To this end, they are configured to resonate at the GNSS frequency f_{GNSS}. It is to be noted that the GNSS frequency f_{GNSS} is 1.575GHz for band L1 and 1.176GHz for dual band L1 and L5 for a GPS.

In a non-limitative embodiment, the cellular antennas 10 are full band FB and/or high band HB antennas. It is to be noted that the FB antennas 10 work at a frequency range from to 700MHz to 5GHz, and the HB antennas 10 work at a frequency range from 1.7GHz to 5GHz.

It means, one can have two FB antennas, or two HB antennas, or a combination of FB and HB antennas.

The cellular antennas 10 comprises each :
- a body, and
- an arm.

The cellular antennas 10 connect each to the electronic support 15 with three contact points extending from the arm.

A first contact point is a first feeding pin. The first feeding pin permits to transmit and receive the power needed for the cellular antennas 10.

In non-limitative embodiment, the first feeding pin is connected to a first reactive component 18, so as to tune the cellular antennas 10 to resonate at the cellular frequency band. By tuning the cellular antenna 10, one means that it changes its electrical length. The cellular antenna physical length is not changing, only the effective electrical length is by changing the value of the corresponding reactive component. Hence, the first feeding pin is also called the first tuning pin. By adjusting the electrical length, one fine-tunes the cellular antenna 10 within the required frequency band. With the value of the corresponding reactive component, one adjusts the electrical length and therefore the antenna resonant frequency within the frequency band. In a non-limitative embodiment, the reactive component is an inductor of a capacitor. It permits to easily tune the cellular antennas 10 and this with no extra cost. The cellular module 13 feeds (connects to) the cellular antennas 10 from the first feeding pins.

A second contact point is a ground pin that matches the impedance of the cellular antennas 10. It permits the connection of the cellular antennas 10 to the ground. It provides some inductance to the cellular antennas 10. The cellular antennas 10 are grounded on the electronic support 15 by means of the ground pin. Hence, there is no need of an extra ground plate, as the electronic support 15 serves as a ground. The matching is when one achieves low reflection of a signal received by the cellular antennas 10.

A third contact point is a loading pin. In non-limitative embodiments, the loading pin is connected to a second reactive component 19, so as to tune the cellular antennas 10 to resonate at the GNSS frequency band f_{gnss}. It acts as a second feeding pin. The GNSS receiver 14 feeds (connects to) the cellular antennas 10 from this second feeding pin so that there is a radiation towards the sky.

With the two different feedings, we excite different resonant modes from the same cellular antenna 10 to obtain both the GNSS and cellular characteristics from the same antenna structure.

The cellular antennas 10 are configured to resonate at the GNSS frequency f_{gnss}. Hence, the cellular antennas 10 are able to receive the linear components Lc of the GNSS signals S_{GNSS}.

In a first non-limitative embodiment, the cellular antennas 10 are metal stamped. In a second non-limitative embodiment, the cellular antennas 10 are printed on the PCBA. This second embodiment allows having an ultra-low profile for the cellular antennas 10. Thus, the telematics control unit 1 can be more compact in height.

In a non-limitative embodiment, the two cellular antennas 10 are configured to have a radiation pattern with a maximum towards the sky so that they can easily communicate with the satellite 3. It permits having the same performance as a GNSS antenna. To this end, one excites the cellular antennas 10 from a different feeding point aka the third contact point to the electronic support 15.

Hence, the GNSS part of a cellular antenna 10 is taken from the loading pin. Hence, one takes a regular cellular antenna and integrates a GNSS linear antenna into the structure, so it won't degrade the cellular antenna but uses it as a parasite structure. This parasite structure is being aimed to look at the sky to fulfill the requirements of the GNSS. By using the loading pin as a feeding connection for GNSS, one obtains more freedom of design. The interest is also that the cellular signals S_{c} and the GNSS signals S_{GNSS} are already divided on different signal traces on the same electronic support 15.

It is to be noted that the GNNS signals S_{GNSS} received from the satellite 3 that is of a GPS type are RCHP signals. It is to be noted that RCHP signals are made of two linear components Lc. Thus, in a non-limitative embodiment, the GNSS signals S_{GNSS} received from the satellite 3 by the cellular antennas 10 are RHCP signals with two linear components Lc. Each one of this linear component Lc will be captured by a cellular antenna 10. One cellular antenna 10 itself can't catch up the total power of the GNNS signals S_{GNSS}. It can only receive one linear component Lc of the GNNS signals S_{GNSS}.

One of the two cellular antennas 10 is polarized in a first direction d, and the other one is polarized in a second direction d' orthogonal to the first direction d. The aim of this polarization arrangement is for the two cellular antennas 10 to receive respectively the two linear components Lc of the RCHP signals.

It is to be noted that each cellular antenna 10 radiates an electromagnetic field. The direction of the electrical magnetic field defines the polarization. So, one obtains a vertical linear polarization in a first direction d, and an horizontal linear polarization in a second direction d' or vice versa. It is to be noted that a linear polarization means that there is a constant electrical magnetic field.

In order to obtain such linear polarization, one cellular antenna 10 is rotated from 90° compared to the other. By rotating, one means that all the legs, the feeding connection, the ground connection etc. of the cellular antenna 10 are rotated.

In the case of four cellular antennas 10 with two FB antennas 10 and two HB antennas 10, one FB antenna 10 is rotated from 90° compared to the other FB antenna 10, and one HB antenna 10 is rotated from 90° compared to the other HB antenna 10.

### Diplexers

The two diplexers 11 are illustrated in figures 1 to 3. They are configured to be each connected to a cellular antenna 10, and both to be connected to the coupler 12 and to said at least one cellular module 13.

The two diplexers 11 are connected respectively to said at least two cellular antennas 10.

Each diplexer 11 is configured to separate the cellular signals S_{c} received by the cellular antenna 10 to which it is connected to and the linear component Lc of the GNSS signals S_{GNSS} it receives. Hence, the diplexers 11 acts as filters for filtering the different types of signals received by the cellular antennas 10.

Each diplexer 11 has two outputs 11.1 and 11.2. A first output 11.1 transmits the cellular signals Sc from the corresponding cellular antenna 10 to the cellular module(s) 13, and a second output 11.2 transmits a linear component Lc of the GNSSS signals S_{GNSS} received from the corresponding cellular antenna 10 to the coupler 12.

### Cellular module 13

Said at least one cellular module 13 is illustrated in figures 1 to 3. It is configured to be connected to the two diplexers 11.

In a first non-limitative embodiment illustrated in figures 1 to 3, the TCU comprises only one cellular module 13. The cellular module 13 is configured to receive the cellular signals S_{c} from the two diplexers 11.

In a first non-limitative embodiment illustrated in figure 1, the cellular module 13 is independent from the TCU. The TCU can be placed away from the cellular module 13 in another location in the vehicle 2.

In a second non-limitative embodiment illustrated in figure 2, the TCU comprises the cellular module 13. The cellular module 13 is integrated in the TCU.

In a second non-limitative embodiment not illustrated, the TCU comprises two cellular modules 13. Each cellular module 13 is configured to be connected to each one of the two diplexers 11 and to receive the cellular signals S_{c} from the corresponding diplexer 11 to which it is connected to.

As known by the man skilled in the art, the cellular signals S_{c} are then analyzed and used for the estimation of the position of the vehicle 2.

### Coupler 12

The coupler 12 is illustrated in figures 1 to 3. The coupler 12 is configured to be connected to the two diplexers 13 and to the GNSS receiver 14.

The coupler 12 is configured to receive as an input the two linear components Lc of a GNSSS signals S_{GNSS} respectively from the two diplexers 11 and to create a 90° phase difference between the two linear components Lc, and to combine them to recreate a GNSSS signal S'_{GNSS}.

Hence, the coupler 12 creates a 90° shift of a linear component Lc coming from one cellular antenna 10 compared to the other linear component Lc coming from the other cellular antenna 10, and makes a combination of both linear components Lc thus obtained to recreate a GNSS signal S'_{GNSS}.

In a non-limitative embodiment, the TCU further comprises two low noise amplifiers for respectively both linear components Lc.

The coupler 12 is further configured to transmit the GNSS signal S'_{GNSS} that has been recreated to said GNSS receiver 14.

### GNSS receiver 14

The GNSS receiver 14 is illustrated in figures 1 to 3. It is configured to be connected to the coupler 12.

The GNSS receiver 14 is configured to receive the GNSS signals S'_{GNSS} from the coupler 12. As known by the man skilled in the art, these GNSS signals S'_{GNSS} are then analyzed and used to give the exact position of the vehicle 2.

It is to be understood that the present invention is not limited to the aforementioned application, embodiments and variations and modifications may be made without departing from the scope of the invention. All statements herein reciting principles, aspects, and embodiments of the invention, as well as specific examples thereof, are intended to encompass equivalents thereof. In this respect, the following remarks are made. Hence, in a non-limitative embodiment, the TCU further comprises other types of antennas such as WIFI, and/or Bluetooth^{™}, and/or V2X antennas for different other functions known by the man skilled in the art.

Hence, some embodiments of the invention may comprise one or a plurality of the following advantages:
- it provides a TCU that is less expensive than the one of the prior art as one antenna (the GNSS one) has been removed,
- it provides a TCU that has a lower weight and that is smaller than the one of the prior art thanks to the same antennas that are configured to connect to a base station and to a satellite to receive respectively the cellular signals S_{c} and the GNSS signals S_{GNSS},
- it provides an easy solution to address the reception of the cellular signals S_{c} and the GNSS signals S_{GNSS} at the same time.

## Claims

1. Telematics control unit (1) for a vehicle, said telematics control unit (1) comprising :
- at least two cellular antennas (10) that are configured to receive each cellular signals (S_{c}), wherein :
- said at least two cellular antennas (10) are also configured to resonate at a GNSS frequency band (f_{gnss}) in order to receive each a linear component (Lc) of a GNSS signal (S_{GNSS}), one of said at least two cellular antennas (10) being polarized in a first direction (d), and the other one being polarized in a second direction (d') orthogonal to the first direction (d),
- said telematics control unit (1) further comprising :
- two diplexers (11) that are configured to separate the cellular signals (S_{c}) received by the corresponding cellular antenna (10) from the linear component (Lc) of the GNSS signals (S_{GNSS}) received by said corresponding cellular antenna (10) and to transmit said cellular signals (S_{c}) to at least one cellular module (13),
- a coupler (12) that is configured to receive from said two diplexers (11) each linear component (Lc) coming from each of said at least two cellular antennas (10) as input and that is configured to combine said linear components (Lc) with a 90° phase shift difference in order to recreate a GNSS signal (S'_{GNSS}) and to transmit it to a GNSS receiver (14).

2. Telematics control unit (1) according to claim 1, wherein said telematics control unit (1) further comprises :
- said least one cellular module (13) that is configured to receive said cellular signals (S_{c}),
- said GNSS receiver (14) that is configured to receive said GNSS signal (S'_{GNSS}) that has been recreated.

3. Telematics control unit (1) according to claim 1 or claim 2, wherein said at least two cellular antennas (10) are configured to have a radiation pattern with a maximum towards the sky.

4. Telematics control unit (1) according to any of the preceding claims, wherein the linear components (Lc) of a GNSS signal (S_{GNSS}) received are linear components (Lc) of a RHCP signal.

5. Telematics control unit (1) according to any of the preceding claims, wherein said at least two cellular antennas (10) are full band (FB) and/or high band (HB) antennas.

6. Telematics control unit (1) according to any of the preceding claims, wherein one cellular antenna (10) of said at least two cellular antennas (10) is rotated from 90° compared to the other.

7. Telematics control unit (1) according to any of the preceding claims, wherein said telematics control unit (1) comprises two full band (FB) antennas (10₁) and two high band (HB) antennas (10₂).

8. Telematics control unit (1) according to any of the preceding claims, wherein said at least two cellular antennas (10) are metal stamped antennas or printed on an electronic support (15) of the telematics control unit (1).
